# EUROPÄISCHE PATENTSCHRIFT

(11) **EP 2 936 471 B1**
(45) Veröffentlichungstag und Bekanntmachung des Hinweises auf die Patenterteilung: **14.09.2016**
(21) Anmeldenummer: 13815427.3
(22) Anmeldetag: 12.12.2013
(51) Int. Cl.: G08G 1/09, G08G 1/0967, H04H 20/55

(54) **VERFAHREN UND SYSTEM ZUM ERZEUGEN VON VERKEHRSINFORMATIONEN FÜR MINDESTENS EIN FAHRZEUG**
METHOD AND SYSTEM FOR GENERATING TRAFFIC INFORMATION FOR AT LEAST ONE VEHICLE
PROCÉDÉ ET SYSTÈME POUR PRODUIRE DES INFORMATIONS RELATIVES AU TRAFIC POUR AU MOINS UN VÉHICULE

(30) Priorität: 19.12.2012 DE 102012223780
(43) Veröffentlichungstag der Anmeldung: 28.10.2015
(73) Patentinhaber: Bayerische Motoren Werke Aktiengesellschaft, 80809 München (DE)
(72) Erfinder: KROMPASS, Stefan, Dr., 85375 Neufahrn (DE); WIEBEL, Stefan, 80796 München (DE); VOIGT, Stephan, 80992 München (DE)
(86) Internationale Anmeldenummer: PCT/EP2013/076357
(87) Internationale Veröffentlichungsnummer: WO 2014/095557

(56) Entgegenhaltungen:
- WO-A1-2008/038974
- DE-A1- 19 937 372
- US-B1- 6 324 466
- US-B1- 6 741 932

## Beschreibung

Die Erfindung betrifft ein Verfahren zum Erzeugen von Verkehrsinformationen für mindestens ein Fahrzeug und ein System zum Erzeugen von Verkehrsinformationen für mindestens ein Fahrzeug.

Es ist bekannt, Verkehrsmeldungen, die auch als Verkehrsinformationen bezeichnet werden, kodiert in Fahrzeuge zu übertragen und zur Routenberechnung in einem Navigationssystem einzusetzen. Insbesondere bei längeren Strecken ist es von Vorteil, auch Verkehrsprognosen zu übertragen. Um zu vermeiden, dass bereits frühzeitig eine alternative Routenberechnung erfolgt, die gar nicht nötig wäre, da bei Erreichen der aktuellen Verkehrsstörung diese behoben sein könnte, ist es von Vorteil, auch Verkehrsprognosen zu übertragen, anhand derer es möglich ist, die Dauer der Störung vorherzusagen und damit die Relevanz für die jeweilige Fahrtroute zu beurteilen: Liegt die Verkehrsstörung gemäß Vorhersage noch vor, wenn das Fahrzeug den Ort der Verkehrsstörung erreicht, so kann bereits jetzt eine alternative Route berücksichtigt werden; ermöglicht hingegen die Vorhersage der Verkehrsstörung, dass diese behoben sein wird, sobald das Fahrzeug den Ort der Verkehrsstörung erreicht, so kann diese spezielle Verkehrsstörung bei der Routenberechnung unberücksichtigt bleiben.

Bekannte Protokolle zur Übertragung von Verkehrsmeldungen sind TMC Alert-C und TPEG (Transport Protocol Experts Group) mit den applikationsspezifischen Ausprägungen CTT (Congestion and Travel Time - Stau- und Reisezeit) und TFP (Traffic Flow and Prediction - Verkehrsfluss und Vorhersage). Diese Protokolle ermöglichen die Übertragung von Verkehrsprognosen.

Dabei werden die Verkehrsinformationen basierend auf so genannten TMC-Locations kodiert. So werden beispielsweise TFP-Vektoren, die den Verkehrsfluss angeben, kodiert als "Start bei TMC-Location mit einer Länge von n TMC-Locations". Die TMC-Locations sind hierbei in sogenannten TMC-Location Tables, die im Folgenden auch als Positionstabellen oder Location Tables bezeichnet werden, gespeichert. In der Positionstabellen sind die TMC-Locations hinterlegt und aktuelle, das heißt derzeit geltende und prognostizierte Verkehrsinformationen werden anhand dieser TMC-Locations erzeugt und werden insbesondere durch die zwischen den TMC-Locations vorliegenden Verkehrsbedingungen wiedergegeben. So kann für den Bereich zwischen zwei TMC-Locations Stau prognostiziert sein, während zwischen zwei anderen TMC-Locations lediglich erhöhtes Verkehrsaufkommen prognostiziert wird.

Diese Verkehrsinformationen, die an einem Fahrzeug, insbesondere in einem Navigationsgerät eines Fahrzeuges, das ein Endgerät eines Navigationssystem darstellt, ausgegeben werden sollen, werden in der Zentraleinrichtung des Navigationssystems, dem sogenannten Backend, erzeugt und an das Fahrzeug übermittelt. In dem Fahrzeug werden die Verkehrsinformationen anhand der in dem Fahrzeug hinterlegten Positionstabelle übertragen und ausgegeben, insbesondere angezeigt. Die Übertragung, Ausgabe und Anzeige der Verkehrsinformationen erfolgt anhand der Positionstabelle in dem Fahrzeug, wobei die Einträge in der Positionstabelle, das heißt die Positionen, Positionen entlang eines Streckenabschnitts sind und geographischen Positionen entsprechen, die auch in einer Karte wiedergegeben werden können.

Um in dem Fahrzeug korrekte Verkehrsinformationen anzeigen zu können, müssen derzeit im Fahrzeug, in dem die Positionstabelle und dazugehörige Karte in dem Navigationsgerät hinterlegt sind, und das Backend, das heißt der Zulieferer der Verkehrsinformationen, auf der gleichen Version der Positionstabelle arbeiten. Dies ist allerdings insbesondere aufgrund von unterschiedlichen Versionen von Positionstabellen nicht immer möglich.

Hierbei treten verschiedene Fehlerfälle auf. Zum einen kann es vorkommen, dass die Positionstabelle in dem Fahrzeug älter ist als die Positionstabelle im Backend. Zum anderen kann es vorkommen, dass die Positionstabelle im Backend älter ist als die Positionstabelle in dem Fahrzeug. Dabei können Positionen, die im Folgenden auch als TMC-Locations bezeichnet werden, wegfallen oder, was wesentlich häufiger auftritt, neue Positionen, das heißt TMC-Locations, hinzukommen. Wenn das Fahrzeug eine andere Positionstabelle als das Backend verwendet, werden die Verkehrsinformationen in unzureichender Qualität angezeigt.

Um dieses Problem zu adressieren offenbart die DE 10 2004 033 075 A1 beispielsweise ein Verfahren zum Überprüfen von Verkehrsinformationen. Hierbei wird beim Erkennen von nicht-auswertbaren Verkehrsinformationen aufgrund unterschiedlicher Versionen der TMC Location Table eine Fehlermeldung erzeugt und dem Fahrer des Fahrzeuges somit die Möglichkeit gegeben seine TMC-Location Table zu überprüfen und gegebenenfalls eine aktualisierte Version zu implementieren.

Ein Nachteil dieses Verfahrens besteht darin, dass der Fahrer oder andere Nutzer eines Verkehrsinformationssystems, aktiv werden muss und das aktuelle Problem des Fahrers oder Nutzers, nämlich, dass ihm nicht die korrekten Informationen angezeigt werden, nicht behoben wird.

Zudem ist in der WO 2008/038974 A1 ein Verfahren zur Bereitstellung einer TPEG-Dienst-Management-Information auf einem Broadcasting-Netzwerk beschrieben. Hierbei werden Mittel zur Bereitstellung der Konsistenz der Service-Management-Informationen, einschließlich Standort Referenzierung (LOC) Informationen, die von einem Telematik Service Provider (TSP) und einem Endgerät verwendet werden, beschrieben. Insbesondere werden die Informationen bei der Übertragung von TPEG-Informationen für eine Verkehrs- und Reiseinformation (TTI) Service durch Einweg-Rundfunknetz bereitgestellt. Das Verfahren ermöglicht es so dem Endgerät TPEG-Informationen zu zumindest einem Verkehrs- und Reise-Informationsservice, der durch das TSP-Center bereitgestellt wird, abzugleichen und zu verwenden. Zudem wird das Endgerät über die Konfiguration und eine Update-Zeit einer Datei, die jeden TPEG-Anwendungsservice konfiguriert, informiert, so dass das Endgerät Informationen möglichst effizient gemäß jedem Anwendungsservice verarbeiten kann.

Wenn die TPEG-Informationen unter Verwendung eines Einweg-Rundfunknetzes übermittelt werden, werden Service-Management-Informationen einschließlich einer Knoten/Link Version und dergleichen durch das TSP-Center an das Endgerät übermittelt. Zudem wird der Endgerätenutzer darüber informiert, ob es notwendig ist, ein Programm, beispielsweise eine elektronische Karte in dem Endgerät zu aktualisieren. Daher werden Service-Management-Informationen, wie beispielsweise die Version der Knoten/Link Informationen, die in dem Endgerät verwendet werden, verwaltet und so gepflegt, dass diese identisch sind mit denen, die in dem Verkehrsinformation-Service-Center, beispielsweise dem TSP-Center, verwendet werden. Hierdurch wird das Problem gelöst, dass das Endgerät gegebenenfalls Informationen von dem Verkehrsinformation-Service-Center nicht verwenden können aufgrund von Diskordanzen von Service Management Informationen.

Die DE 199 37 372 A1 offenbart ein Verfahren zur Anforderung und zur Verarbeitung von Verkehrsmeldungen, bei dem eine Verkehrsmeldungsanfrage von einem Mobilfunkgerät abgesandt und von einem Dienstanbieter mindestens eine Verkehrsmeldung über eine Basisstation bereitgestellt wird, wobei die Verkehrsmeldung als codierte Kurznachricht übertragen wird. Bei der Verkehrsmeldungsanfrage werden Informationen über die Version der gespeicherten Daten oder Datengruppen, die in dem in dem Mobilfunkgerät zugeordneten Speicher abgelegt sind, und/oder den Hersteller der gespeicherten Daten oder Datengruppen und/oder das Ausgabedatum der gespeicherten Daten oder Datengruppen an die Basisstation übertragen, so dass die Basisstation bei der Rückmeldung der Verkehrsmeldungen die Codierung so vornehmen kann, dass aufgrund der gespeicherten Daten im Fahrzeug die codierten Daten gut verwertbar sind. Dadurch wird erreicht, dass auch bei sich ändernden Daten eine Auswertung der codierten Verkehrsnachrichten im Mobilfunkgerät auf jeden Fall gewährleistet ist.

Schließlich offenbart die US 6 741 932 B1 ein System und ein Verfahren, bei dem Verkehrsinformationen an den Endnutzer übermittelt werden. Die Verkehrsinformationen sind in Verkehrsdatennachrichten enthalten, die Positionsreferenzcodes verwenden, um Positionen entlang Straßen zu identifizieren. Eine Datenstruktur wird gebildet, die einen Satz von Positionsreferenzcodes die Positionen entlang Straßen von einem ersten Datenanbieter zu einem anderen Satz von Positionsreferenzcodes die Positionen entlang Straßen von einem zweiten Datenanbieter in Relation setzt. Hierzu kann eine Konversionstabelle verwendet werden.

Ein Nachteil dieser Verfahren besteht darin, dass bei Erkennen einer Abweichung von Versionen von Programmen, eine Aktualisierung der Programme, beispielsweise der Kartendaten erfolgen muss.

Aufgabe der vorliegenden Erfindung ist es daher eine Lösung zu schaffen, die es auch bei unterschiedlichen Versionen von Positionsangaben auf dem Fahrzeug und dem Backend erlaubt Verkehrsinformationen korrekt wiederzugeben.

Der Erfindung liegt die Erkenntnis zugrunde, dass diese Aufgabe gelöst werden kann, indem Verkehrsinformationen aufgrund von Versionsunterschieden zwischen Versionen von Positionstabellen verarbeitet werden.

Gemäß einem ersten Aspekt der Erfindung wird die Aufgabe daher gelöst durch ein Verfahren zum Erzeugen von Verkehrsinformationen für mindestens ein Fahrzeug, die mindestens eine Position umfassen, für einen Streckenverlauf auf einer geographischen Karte, der durch mindestens zwei Positionen bestimmt ist. Das Verfahren ist dadurch gekennzeichnet, dass das Verfahren zumindest die folgenden Schritte umfasst:
- Vergleich einer aktuell verwendeten Positionstabelle mit mindestens einer weiteren Positionstabelle;
- Ermitteln von Abweichungen in den Einträgen der Positionstabellen an Positionen entlang des Streckenverlaufs; und
- Bei Vorliegen einer Abweichung, Verwendung der Position des abweichenden Eintrages in einer der Positionstabellen als Referenzpunkt für die zu erzeugenden Verkehrsinformationen.

Das Verfahren wird vorzugsweise in einem System verwendet, bei dem ein Fahrzeug, insbesondere ein einem Fahrzeug zugeordnetes Navigationsgerät, mit einer Zentraleinrichtung kommuniziert, die auch als Backend bezeichnet wird. Die Zentraleinrichtung stellt eine Infrastruktur des Systems dar und kann aus einer oder mehreren Rechnereinheiten bestehen.

Als Verkehrsinformationen werden im Sinne der Erfindung Informationen verstanden, die Auskunft über die Verkehrsbedingungen an einer geographischen Position und insbesondere auf einer Strecke zwischen zwei geographischen Positionen geben. Die Strecke zwischen zwei geographischen Positionen wird im Folgenden auch als Abschnitt oder Streckenabschnitt bezeichnet. Diese Verkehrsinformationen können dem Fahrer eines Fahrzeuges angezeigt werden. Die Verkehrsinformationen umfassen mindestens eine Position. Gemäß dem vorliegenden Verfahren wird die mindestens eine Position durch Positionsangaben in einer Positionstabelle ausgedrückt, in der zu einzelnen Positionen Einträge vorhanden sind, insbesondere Positionsdaten angeben sind. Die Positionsdaten werden daher auch als Positionsangaben bezeichnet. Als Eintrag der Positionstabelle werden Positionsdaten zu einer bestimmten Position bezeichnet. Die Positionsangaben stellen vorzugsweise so genannte Traffic Message Channel (TMC) Positionsangaben dar. TMC ist eine Technologie, die verwendet wird, um Verkehrsbeeinträchtigungen mittels Signalen, beispielsweise im nichthörbaren Bereich des UKW-Signals in digitaler Form an Fahrzeuge zu versenden. Die Positionsangaben werden auch als Positionscodes bezeichnet, wobei die Zuordnung der Positionscodes, die auch als Location Codes bezeichnet werden, zu einem geographischen Ort über die Positionstabelle, die auch als Location Table bezeichnet wird, erfolgt. Erfindungsgemäß wird eine aktuell verwendete Positionstabelle mit mindestens einer weiteren Positionstabelle verglichen. Als aktuell verwendete Positionstabelle wird eine Positionstabelle bezeichnet, die zur Verknüpfung von Positionsangaben mit Verkehrsdaten verwendet wird: Die Verkehrsdaten stellen insbesondere Verkehrsnachrichten, wie eine Nachricht über einen Stau dar.

Die mindestens eine weitere Positionstabelle ist erfindungsgemäß eine weitere Version der aktuell verwendeten Positionstabelle. Insbesondere decken die in den Positionstabellen, das heißt der aktuell verwendeten Positionstabelle und der mindestens einen weiteren Positionstabelle, zumindest bereichsweise den gleichen geographischen Bereich ab. Stehen mehrere Versionen der Positionstabelle zur Verfügung wird als weitere Positionstabelle, die mit der aktuell verwendeten Positionstabelle verglichen wird, vorzugsweise die Positionstabelle gewählt, die das älteste Erzeugungs- oder Aktualisierungsdatum besitzt. Im Folgenden wird dahersofern nicht anders angegeben - die aktuell verwendete Positionstabelle auch als neue Version der Positionstabelle und die mindestens eine weitere Positionstabelle als ältere oder älteste Version der Positionstabelle bezeichnet. Die Erfindung ist allerdings nicht auf diese Konstellation beschränkt.

Indem erfindungsgemäß die aktuell verwendete Positionstabelle mit mindestens einer weiteren Positionstabelle verglichen wird, werden Abweichungen der in den Positionstabellen enthaltenen Einträge erkannt. Somit kann insbesondere der Unterschied zwischen der ältesten und der neuen Version der Positionstabelle bestimmt werden.

Das Erkennen der Abweichungen wird erfindungsgemäß so verwendet, dass die Position, an der die Abweichung in zumindest einer der Positionstabellen erkannt wird, als Referenzpunkt bei der Erzeugung der Verkehrsinformationen verwendet wird. Die Verwendung als Referenzpunkt für die Erzeugung der Verkehrsinformationen bedeutet in diesem Zusammenhang, dass an den Positionen, an denen Abweichungen erkannt wurden, die Erzeugung im Vergleich zu der Erzeugung von Verkehrsinformationen an Positionen , an denen keine Abweichung erkannt wurde, anders durchgeführt wird. Beispielsweise werden die mit den Einträgen zu verbindenden Verkehrsdaten an diesen Positionen anders behandelt.

Auf diese Weise wird es möglich nicht nur eine Information darüber zu erhalten, dass gegebenenfalls eine Abweichung zwischen Versionen der Positionstabellen vorliegen, sondern diese erkannten Abweichungen können bei der Erzeugung der Verkehrsinformationen berücksichtigt werden und die Erzeugung der Verkehrsinformationen kann somit genauer erfolgen. Insbesondere kann durch das erfindungsgemäße Verfahren eine versionsunabhängige Erzeugung von Verkehrsinformationen erfolgen.

Die Verkehrsinformationen werden erfindungsgemäß für einen Streckenverlauf auf einer geographischen Karte bestimmt. Hierbei ist der Streckenverlauf durch mindestens zwei Positionen bestimmt. Der Abstand zwischen zwei Positionen auf einem Streckenverlauf wird auch als Abschnitt bezeichnet. Sofern im Folgenden auf die "nächste Position" Bezug genommen wird, wird hierdurch die nächste Position entlang des Streckenverlaufs bezeichnet. Auch andere Bezugnahmen der relativen Lage der Positionen zueinander beziehen sich - soweit nicht anders angegeben auf die Positionen entlang eines Streckenverlaufs.

Vorzugsweise stellt das Abweichen von Einträgen das Fehlen eines Eintrages der Position in der weiteren Positionstabelle oder das Vorhandensein einer zusätzlichen Position in der weiteren Positionstabelle dar. Indem sowohl das Fehlen als auch das Hinzufügen von Einträgen in den Positionstabellen bei dem Vergleich ermittelt wird, können unterschiedliche Szenarien abgedeckt werden. Insbesondere kann mit dem erfindungsgemäßen Verfahren sowohl die aktuell verwendete Version eine neuere oder eine ältere Version der Positionstabelle darstellen. Dies ist vorteilhaft, da die aktuell verwendete Version der Positionstabelle in der Regel an einer Zentralstelle, die auch als Backend bezeichnet wird, verwendet wird. Hierbei kann es vorkommen, dass an dem Backend eine neuere oder aber eine ältere Version verwendet wird, als die Version, die in einem Fahrzeug, das mit der Zentraleinrichtung kommuniziert und an dem die Verkehrsinformationen ausgegeben werden sollen, verwendet wird. Bei älteren Versionen einer Positionstabelle sind in der Regel weniger Einträge in der Positionstabelle vorhanden als in der neueren Version. Bei einem Vergleich einer älteren zu einer jüngeren oder neueren Version wird somit als Abweichungen vorwiegend das Vorhandensein zusätzlicher Einträge in der neueren Version erkannt werden. Bei einem Vergleich einer jüngeren zu einer älteren Version hingegen wird in der Regel das Fehlen von Einträgen in der älteren Version erkannt. Da in der Regel aber an der Zentraleinrichtung die neueste Version der Positionstabelle verwendet wird, ist das Abweichen vorzugsweise das Fehlen eines Eintrages in der Positionstabelle.

Gemäß einer Ausführungsform umfasst das Verfahren zumindest den folgenden Schritt:
- Erzeugen von Verkehrsinformationen in Form eines Vektors anhand der aktuell verwendeten Positionstabelle, wobei die Position des mindestens einen abweichenden Eintrags als Referenzpunkt für das Erzeugen zumindest eines Teilvektors des Vektors verwendet wird.

Die weiteren Schritte des erfindungsgemäßen Verfahrens insbesondere der Vergleich der Positionstabellen und das Ermitteln von Abweichungen werden auch bei dieser Ausführungsform des Verfahrens durchgeführt.

Indem bei dieser bevorzugten Ausführungsform der Vektor, der die Verkehrsinformationen angibt, durch Teilvektoren erzeugt wird, wobei bei zumindest einem der Teilvektoren die Position des mindestens einen abweichenden Eintrages als Referenzpunkt dient, wird die Genauigkeit der zu erzeugenden Verkehrsinformationen gesteigert. Bei herkömmlichen Verfahren werden die Verkehrsinformationen beispielsweise als TFP-Vektor angegeben, wobei eine Startposition aus der Positionstabelle gewählt wird und der Vektor durch Angabe der Anzahl von zwischen Startposition und Endposition des Vektors liegenden Einträgen in der Positionstabelle angegeben wird. Hierbei wird also eine quantitative Angabe bezüglich der Einträge in der Positionstabelle, das heißt Positionen, vorgenommen, ohne die Qualität, insbesondere das Vorliegen eines Eintrages für eine Position zu berücksichtigen. Durch diese rein quantitative Angabe kann es zu einer erheblichen Verzerrung oder Stauchung beziehungsweise einem erheblichen Versatz der erzeugten Verkehrsinformation zu den tatsächlich vorliegenden Verkehrssituationen kommen. Bei dem erfindungsgemäßen Verfahren wird hingegen die Abweichung von Einträgen berücksichtigt und insbesondere als Referenzpunkt für das Erzeugen eines Teilvektors verwendet. Durch die Aufspaltung eines einzelnen Vektors mit einer qualitativen Angabe von Einträgen in der Positionstabelle, in Teilvektoren kann das Verzerren der zu erzeugenden Verkehrsinformationen minimiert werden.

Vorzugsweise bestimmt die Position, an der eine Abweichung zwischen den Versionen der Positionstabellen erkannt wird, das Ende eines Teilvektors, der einen Teil des Vektors darstellt, der die Verkehrsinformationen für einen Streckenverlauf angibt. Die Position, an der eine Abweichung vorliegt, kann das Ende des Teilvektors dadurch bestimmen, dass diese Position als Endposition des Teilvektors verwendet wird. Alternativ kann die Position der Abweichung das Ende des Teilvektors dahingehend bestimmen, dass die Endposition eines Teilvektors, der an der Position der Abweichung beginnt, auf die erste Position in dem Streckenverlauf gelegt wird, an der nach der Abweichung wieder eine Übereinstimmung der Positionen in den beiden Versionen der Positionstabelle vorliegt.

Gemäß einer bevorzugten Ausführungsform umfasst das erfindungsgemäße Verfahren daher den Schritt des Bestimmens einer Endposition eines Teilvektors eines Vektors, der die Verkehrsinformationen darstellt, aus der aktuell verwendeten Positionstabelle, wobei die Position des mindestens einen abweichenden Eintrags als Endposition des Teilvektors verwendet wird. Insbesondere bei Erkennen des Fehlens eines Eintrages für eine Position in der Version der Positionstabelle, die mit der aktuellen Positionstabelle verglichen wird, wird ein insgesamt die Verkehrsinformationen darstellender Vektor somit aufgespaltet, das heißt der Teilvektor endet an der Position, die der Position entspricht, an der in der zu vergleichenden Version der Positionstabelle kein Eintrag vorhanden ist. Durch dieses Unterteilen oder Aufspalten des Vektors in Teilvektoren kann der Versatz der anhand einer älteren Version der Positionstabelle ausgegebenen Verkehrsinformationen verringert werden. Wird beispielsweise an einer Position, die in beiden Versionen der Positionstabellen enthalten ist, ein Stau mit einer Länge gemeldet, die der Länge des Streckenabschnitts bis zur nächsten Position der neuen Version der Positionstabelle auf dem Streckenverlauf entspricht, würde dies zu einem Versatz der Verkehrsinformationen bei Verwendung der älteren Version der Positionstabelle führen, wenn diese nächste Position, an der der Stau endet, in der älteren Positionstabelle nicht enthalten ist. In diesem Fall würde die Übertragung der Verkehrsinformationen nämlich dazu führen, dass von der letzten gemeinsamen Position ein Stau bis zu der nächsten in der älteren Version enthaltenen Position angenommen wird. Fehlen entlang des Streckenverlaufs mehrere aufeinanderfolgende Positionen in der älteren Version, so ist der Versatz erheblich.

Da aber bei der bevorzugten Ausführungsform des erfindungsgemäßen Verfahrens an der Position, an der der Eintrag in der zu vergleichenden Positionstabelle fehlt, der Teilvektor beendet wird, können für darauf folgende Abschnitte vorliegende Verkehrsdaten entsprechend dieser Verzerrung bearbeitet werden und die Verzerrung somit minimiert werden.

Gemäß einer bevorzugten Ausführungsform umfasst das Verfahren den Schritt des Bestimmens einer Startposition eines Teilvektors eines Vektors, der die Verkehrsinformationen darstellt, aus der aktuell verwendeten Positionstabelle, wobei bei Erkennen einer Abweichung an der Position der Startposition als Endposition des Teilvektors die nächste Position verwendet wird, an der keine Abweichung vorliegt.

Als nächste Position wird hierbei erneut die nächste Position entlang eines Streckenverlaufs bezeichnet, für den durch den Vektor Verkehrsinformationen wiedergegeben werden sollen.

Indem bei der Bestimmung der Startposition eines Teilvektors bei dieser Ausführungsform des erfindungsgemäßen Verfahrens insbesondere das Fehlen eines Eintrags an dieser Tabellenstelle erkannt wird, ist offensichtlich, dass die folgenden Verkehrsdaten ausgespart werden müssen, um einen weiteren Versatz der Verkehrsinformationen verhindern zu können. Allerdings müssen Verkehrsinformationen, die sich auf Positionen beziehen, die in der weiteren Positionstabelle wieder vorhanden sind, zuverlässig berücksichtigt werden. Indem der Teilvektor, der an einer Position beginnt, zu der es in der zu vergleichenden Positionstabelle keinen Eintrag gibt, auf die Länge begrenzt wird, an deren Ende wieder ein gemeinsamer Eintrag der beiden Positionstabellen, das heißt eine Übereinstimmung, vorliegt, wird die zum Ausgleich des Versatzes zu vernachlässigende Information minimiert. Auf der Seite des Systems, an der eine ältere Version der Positionstabelle verwendet wird, beispielsweise im Fahrzeug, wird die in diesem Teilvektor enthaltene Verkehrsinformation vernachlässigt beziehungsweise fallen gelassen. Ein gesondertes Kennzeichnen des Teilvektors ist hierbei nicht erforderlich, da das der Teil des Systems, der mit der älteren Version der Positionstabelle arbeitet, die Startposition des Teilvektors in der Positionstabelle nicht findet und diese Daten daher nicht weiter verarbeiten kann.

Gemäß einer Ausführungsform erfolgt das Erzeugen der Verkehrsinformationen in einer Zentraleinrichtung und die erzeugten Verkehrsinformationen werden von der Zentraleinrichtung in Form von mindestens einem Teilvektor an mindestens ein Fahrzeug übermittelt. Die Zentraleinrichtung wird auch als Backend bezeichnet. In dem Fahrzeug, an das die erzeugten Verkehrsinformationen übermittelt werden, ist eine Vorrichtung vorgesehen, die zur Weiterverarbeitung und Ausgabe der Verkehrsinformationen dient. Diese Vorrichtung ist insbesondere die fahrzeugseitige Vorrichtung oder das fahrzeugseitige Gerät eines Navigationssystems. Die Vorrichtung kann eine fahrzeuggebundene Einheit darstellen oder als separate Vorrichtung in das Fahrzeug eingebracht werden. An der Vorrichtung in dem Fahrzeug werden die empfangenen Verkehrsinformationen anhand einer in dem Fahrzeug verfügbaren Positionstabelle übertragen, das heißt den in der Positionstabelle enthaltenen Positionen und Abschnitten zwischen den Positionen werden die Verkehrsdaten zugeordnet, die von der Zentraleinrichtung für diese Position oder diesen Abschnitt übertragen wurden.

Vorzugsweise stellt die Positionstabelle, die in dem erfindungsgemäßen Verfahren verwendet wird, eine TMC (Traffic Message Channel)-Location Tabelle dar. Der Vektor, der die Verkehrsinformationen widerspiegelt und insbesondere Positionsangaben und Verkehrsdaten enthält, stellt vorzugsweise einen TFP (Traffic flow prediction)-Vektor dar.

Da auch bei der bevorzugten Aufspaltung eines Vektors an Stellen, an denen eine Abweichung zwischen Einträgen in verschiedenen Positionen besteht, ein gewisser Versatz oder ein Verzerren beziehungsweise Stauchen der Verkehrsinformationen nicht vollständig verhindert werden kann, kann erfindungsgemäß kann bei Erkennen der Verschiebung mindestens eines Teilvektors des Vektors, der dem Streckenverlauf entspricht ein relativer Offset, insbesondere metrischer Offset verwendet werden.

Gemäß einem weiteren Aspekt betrifft die Erfindung ein System zur Erzeugung von Verkehrsinformationen für mindestens ein Fahrzeug. Das System ist dadurch gekennzeichnet, dieses eine Zentraleinrichtung und mindestens eine fahrzeuggebundene Vorrichtung umfasst, die derart eingerichtet sind, dass das Verfahren nach einem der vorhergehenden Ansprüche durchführbar ist.

Die fahrzeuggebundene Vorrichtung kann eine Prozessoreinheit und/oder eine zumindest teilweise festverdrahtete Schaltungsanordnung umfassen und kann fest mit dem Fahrzeug verbunden sein oder in dieses eingebracht werden. Die Zentraleinrichtung stellt das Backend dar.

Das erfindungsgemäße System ist vorzugsweise ein Navigationssystem, das besonders bevorzugt zumindest eine Zentraleinrichtung und zumindest eine Vorrichtung für zumindest ein Fahrzeug umfasst. Die Zentraleinrichtung stellt hierbei das Backend des Navigationssystems dar.

Vorteile und Merkmale, die bezüglich dem erfindungsgemäßen Verfahren beschrieben werden, gelten - soweit anwendbar - entsprechend für das erfindungsgemäße System und umgekehrt und werden daher gegebenenfalls nur einmalig erläutert oder erwähnt.

Die Erfindung wird im Folgenden erneut unter Bezugnahme auf die beiliegenden Zeichnungen beschrieben. Hierbei zeigen:
Figur 1: eine schematische Darstellung von Verkehrsinformationen in einer Karte;
Figur 2: schematisch Verkehrsinformationen an einer Zentraleinrichtung mit neuer Version der Positionstabelle und an einem Fahrzeug mit älterer Version der Positionstabelle nach dem Stand der Technik ;
Figur 3: schematisch Verkehrsinformationen an einer Zentraleinrichtung mit älterer Version der Positionstabelle und an einem Fahrzeug mit neuerer Version der Positionstabelle nach dem Stand der Technik ;
Figuren 4 bis 10: schematische Darstellungen von Schritten der Erzeugung und Verarbeitung von Verkehrsinformationen bei zwei Fahrzeugen mit unterschiedlichen Versionen der Positionstabelle gemäß einer Ausführungsform der Erfindung; und
Figur 11: eine schematische Darstellung von Verkehrsinformationen an einer Zentraleinrichtung mit neuer Version der Positionstabelle und an zwei Fahrzeuge mit älterer beziehungsweise neuerer Version der Positionstabelle übertragene Verkehrsinformationen.

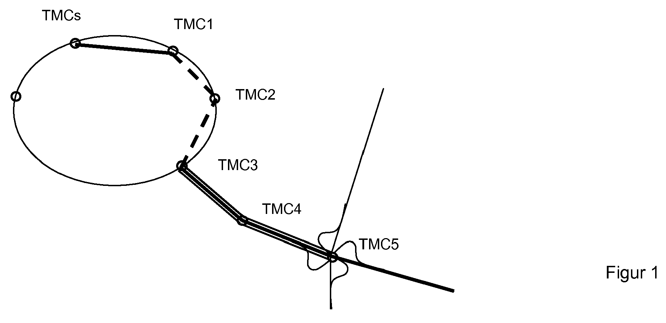

In Figur 1 ist eine schematische Darstellung von erzeugten Verkehrsinformationen in einer Straßenkarte entlang einem Streckenverlauf gezeigt. In der dargestellten Ausführungsform beginnt der Steckenverlauf an einer Position TMCs und endet an einer Position TMC5, die an einem Autobahnkreuz liegt. In dem Streckenabschnitt zwischen TMCs und TMC1 sind als Verkehrsdaten "freie Fahrt" angegeben. Zwischen den Positionen TMC1, TMC2 und TMC3 ist "stockender Verkehr" angegeben. Zwischen den Positionen TMC3, TMC4 und TMC5 ist "Stau" angegeben. Die für die entsprechenden Streckenabschnitte geltenden Verkehrsdaten sind in allen Figuren mit einer durchgezogenen Linie für "frei", mit einer gestrichelten Linie für "stockender Verkehr" und mit einer Balkenlinie für "Stau" wiedergegeben. Die Streckenabschnitte werden im Folgenden auch als Abschnitte bezeichnet.

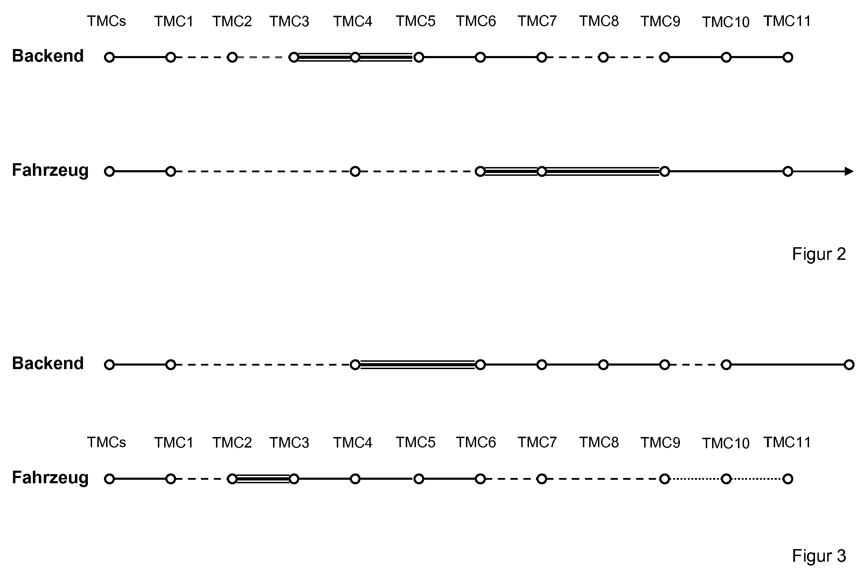

Figur 2 zeigt in der oberen Zeile schematisch eine Verkehrsinformation in Form eines TFP-Vektors mit 12 Abschnitten, der von einem Backend an ein Fahrzeug übermittelt werden kann. Der TFP-Vektor wird hierbei durch die Angabe einer Startposition TMCs sowie der Anzahl der in dem Vektor enthaltenen Abschnitte, die durch die Abstände zwischen weiteren Positionen TMC1-TMC11 gebildet sind, bestimmt. Für jeden der Abschnitte sind Verkehrsdaten angegeben. Beispielswiese lauten die Verkehrsdaten für den ersten Abschnitt zwischen TMC1 und TMC2 "frei", für den zweiten Abschnitt zwischen TMC2 und TMC3 "stockender Verkehr" und für den vierten Abschnitt zwischen TMC3 und TMC4 "Stau". Die Positionsangaben TMC1, TMC2 und so weiter sind in einer Positionstabelle, die auch als TMC-Location Table bezeichnet wird, hinterlegt, das heißt stellen Einträge in der Positionstabelle dar. Die Einträge können auch als Positionen bezeichnet werden, da diese geographischen Orten oder Positionen entsprechen.

Bei dem in Figur 2 gezeigten TFP-Vektor sind von einer TMC-Location ausgehend, 12 TMC-Locations abgedeckt. In der unteren Zeile in Figur 2 ist die Verkehrsinformation wie diese an einem Fahrzeug mit einer älteren Positionstabelle, die auch als TMC-Location Table bezeichnet wird, aufgrund der gesendeten Verkehrsinformationen gemäß dem Stand der Technik übertragen und an den Benutzer ausgegeben würde, gezeigt.

In der älteren TMC-Location Table sind für einige Positionen keine Einträge in der TMC-Location Table enthalten. Beispielsweise sind zu TMC2 und TMC3 in der älteren TMC-Location Table keine Einträge enthalten, das heißt diese Positionen sind in der älteren Version der Positionstabelle nicht enthalten.

Wie sich aus Figur 2 ergibt, wird bei einer älteren Positionstabelle an dem Fahrzeug der TFP-Vektor nach hinten verzerrt und es kommt so zur Ausgabe von nicht korrekten Angaben in dem Fahrzeug, insbesondere in einem fahrzeuggebundenen Teil eines Navigationssystems in dem Fahrzeug. Insbesondere würde für die Abschnitte zwischen TMC1 und TMC6 stockender Verkehr an dem Fahrzeug angezeigt, obwohl diese Verkehrssituation nur in den Abschnitten TMC1 bis TMC3 besteht.

In Figur 3 ist der umgekehrte Fall gezeigt, bei dem die Version der Positionstabelle in dem Fahrzeug neuer ist als die Positionstabelle im Backend. In diesem Fall wird der TFP-Vektor komprimiert an dem Fahrzeug erhalten und gibt somit ebenfalls die tatsächliche Situation nicht korrekt wieder.

Erfindungsgemäß wird vorzugsweise an dem Backend die älteste Version der Positionstabelle, die von der aktuellen verwendeten Positionstabelle an dem Backend unterstützt werden soll, ermittelt. Diese kann beispielsweise Version 8 sein, während an dem Backend beispielsweise Version 9 für aktuell für die Erzeugung verwendet wird. Die neuere Version wird im Folgenden und in den Figuren mit vN und die ältere unterstützte Version mit vA bezeichnet. Die vorliegende Erfindung ist nicht nur auf einen Versionssprung von einer Version zur nächsten Version begrenzt. Vielmehr können zwischen der aktuell verwendeten Version vN und der weiteren älteren Version vA beliebig viele Versionen vorhanden sein.

In der neueren Positionstabelle vN sind von dem TFP-Vektor, wie in Figur 2 gezeigt, beispielsweise 13 TMC-Locations abgedeckt, während in der älteren Positionstabelle vA für den gleichen Streckenverlauf nur sieben Positionen eingetragen sind.

Gemäß der vorliegenden Erfindung werden die fehlenden Positionen fingiert beziehungsweise bei der Erzeugung der Verkehrsinformationen zumindest berücksichtigt. Dabei wird ein relatives Adressieren verwendet.

Erfindungsgemäß findet hierzu eine Aufspaltung der TFP-Vektoren an den Positionen, die in der älteren Positionstabelle nicht enthalten sind, statt.

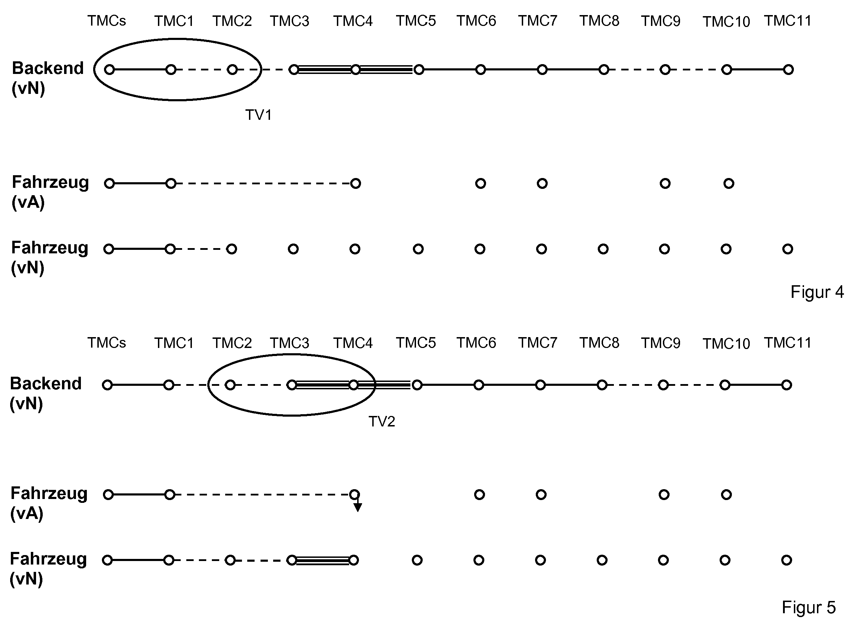

Dies wird im Folgenden anhand der Figuren 4 bis 10 genauer erläutert. An dem Backend wird erkannt, dass nach der Start-TMC-Location die Position TMC2 in der älteren Version nicht vorhanden ist. Der ursprünglich mit der Start-TMC-Location und der Länge von 12 TMC-Locations angegebene TFP-Vektor wird daher an der Position TMC2 der Positionstabelle vN an dem Backend aufgespaltet. Die Positionen TMCs bis TMC2 mit den für die dazwischen liegenden Abschnitte geltenden Verkehrsdaten bilden somit einen ersten Teilvektor TV1. An dem Fahrzeug mit der Positionstabelle vA führt dies dazu, dass der erste Abschnitt (TMCs-TMC1) des TFP-Vektors entsprechend dem ersten Teil der Positionstabelle vN an dem Backend erkannt wird. Der zweite Teil ist bei der Positionstabelle vA allerdings erheblich länger und entspricht der Länge von TMC1 bis TMC4 der Positionstabelle vN. Zum Vergleich ist die Übertragung, wie diese an dem Fahrzeug mit der neuen Version vN empfangen wird, in der dritten Spalte der Figuren 4 bis 10 jeweils angegeben.

Da auch die Position TMC3 nicht in der Positionstabelle vA enthalten ist, wird bei der Übermittlung als nächster Teilvektor TV2 der Teil zwischen den Positionen TMC2 und TMC3 sowie zwischen den Positionen TMC3 und TMC4 übermittelt. Dies ist in Figur 5 gezeigt. Da die Position TMC4 auch in der Positionstabelle vA enthalten ist, endet hier die Aufspaltung. Anders ausgedrückt, wird bei Erkennen der Tatsache, dass der Beginn des Teilvektors an einer Position liegt, die in der älteren Positionstabelle vA nicht enthalten ist, das heißt an einer Position liegt, die eine Abweichung zwischen den Versionen darstellt, das Ende des Teilvektors auf die erste Position gelegt, bei der die Versionen wieder übereinstimmen. Das heißt, dass das Ende eines solchen Teilvektors an einer Position liegt, die auch in der älteren Version der Positionstabelle vA enthalten ist.

Wie sich aus der zweiten Zeile in Figur 5 ergibt, wird an dem Fahrzeug mit der Positionstabelle vA der übermittelte Teilvektor TV2 ignoriert beziehungsweise fallen gelassen. Hierdurch kann die Verschiebung beziehungsweise Streckung, die in Figur 2 gezeigt wurde, verringert werden. In dem Fahrzeug mit der Positionstabelle vN hingegen entspricht auch der zweite Teilvektor TV2 dem Teilvektor an dem Backend.

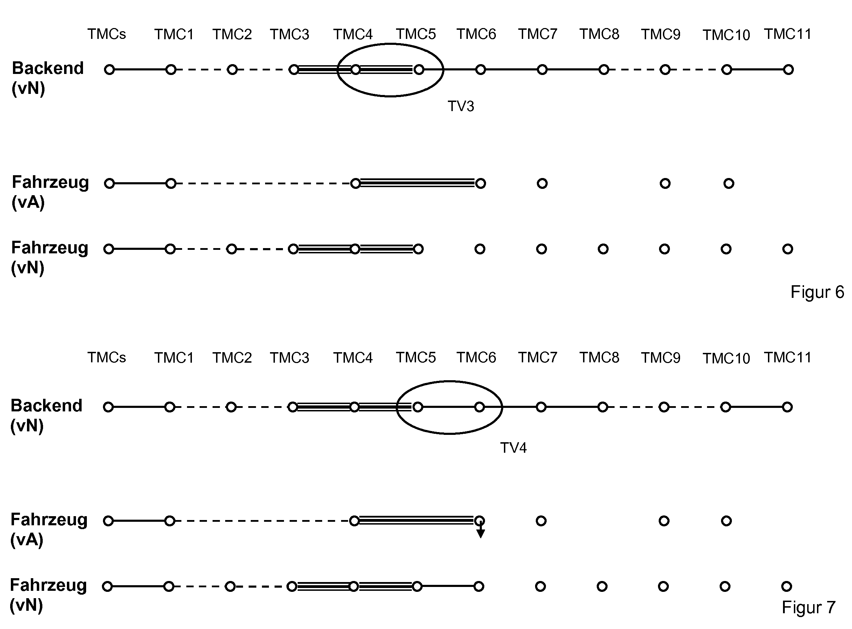

Wie in Figur 6 gezeigt wird die Länge des nächsten Teilvektors TV3 bis zu der Position TMC5 bestimmt, da an dieser Position erneut eine Abweichung zwischen der neuen und alten Version vorliegt. Die Position TMC5 ist nämlich in der älteren Version vA nicht vorhanden. Der Teilvektor TV3 wird bei Verwendung der Positionstabelle vA in dem Fahrzeug daher bis zu der Position gestreckt, die der Position TMC6 der Backend-Version entspricht.

Der nächste Teilvektor TV4 reicht von Position TMC5 bis zu Position TMC6. Die Länge dieses Teilvektors wird so bestimmt, da dessen Startposition in der älteren Version vA nicht enthalten ist, das heißt an dieser Position eine Abweichung vorliegt. , Bei einem solchen Teilvektor wird das Ende des Teilvektors an der Position definiert, an der die erste Gemeinsamkeit der beiden Versionen wieder vorliegt. Der Teilvektor TV4, der in Figur 7 dargestellt ist, stellt somit erneut einen Teilvektor dar, der, da dessen Anfangsposition in der Positionstabelle vA nicht enthalten ist, an dem Fahrzeug mit der Positionstabelle vA vernachlässigt oder fallen gelassen wird. Da die Position TMC6 aber in der Positionstabelle vA wieder enthalten ist, endet der Teilvektor TV4 hier.

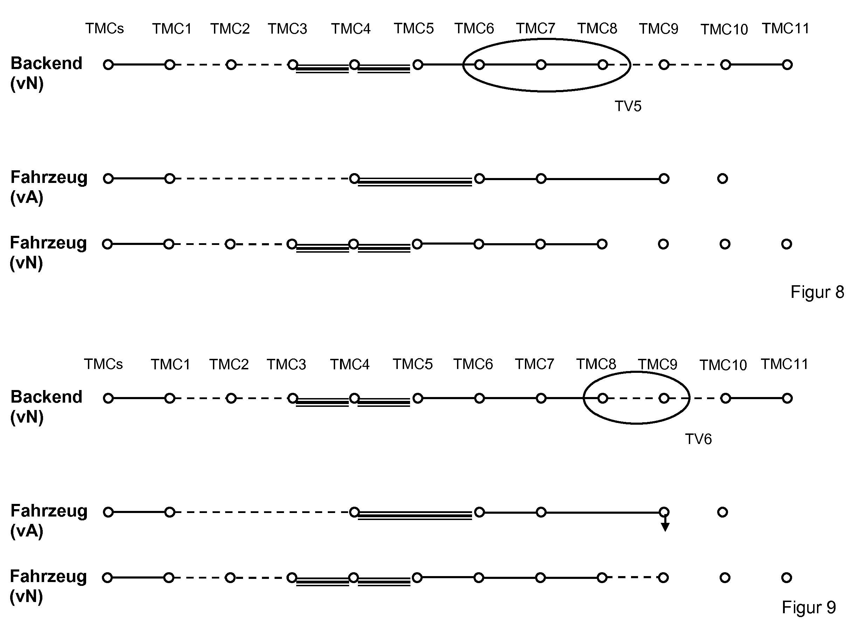

Wie sich aus Figur 8 ergibt, umfasst der nächste Teilvektor TV5, der bei der Position TMC6 beginnt, wieder zwei Abschnitte und reicht bis zur Position TMC8. Der Teilvektor TV5 wird an der Position TMC7 nicht unterbrochen, da dieser Teilvektor TV5 an einer Position beginnt, die auch in der Positionstabelle vA enthalten ist und die Position TMC7 ebenfalls in der Positionstabelle vA enthalten ist. Erst die Position TMC8 fehlt in der Positionstabelle vA so dass der Teilvektor TV5 dort endet.

Der nächste in Figur 9 gezeigte Teilvektor TV6 fängt an der Position TMC8 an, die in der Positionstabelle vA fehlt. Daher endet der Teilvektor TV6 an der ersten Position, die danach wieder in der Positionstabelle vA enthalten ist. Dadurch wird der Versatz minimiert. Der Teilvektor TV6 wird an dem Fahrzeug mit Positionstabelle vA vernachlässigt oder fallen gelassen.

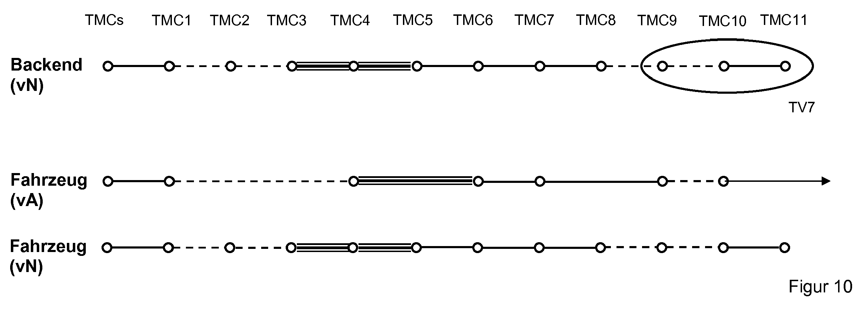

Bei dem letzten Teilvektor 7, der in Figur 10 gezeigt ist, sind die Verhältnisse entsprechend dem Teilvektor TV7. Das heißt, dass dieser an einer Position beginnt, die in beiden Versionen der Positionstabelle vA und vN enthalten ist und an der ersten Position endet, an der eine Abweichung zwischen den Versionen der Positionstabelle vA und vN auftritt.

Somit werden gemäß dem erfindungsgemäßen Verfahren statt einem Vektor, der 12 Abschnitte abdeckt, ein Vektor mit sieben Teilvektoren erzeugt, wobei vier Teilvektoren zwei Abschnitte abdecken und drei Teilvektoren jeweils nur einen Abschnitt abdecken.

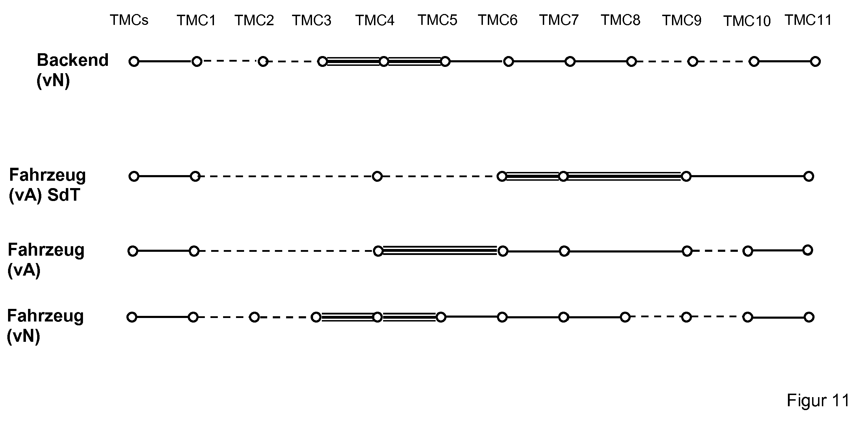

Das Ergebnis der erfindungsgemäßen Erzeugung von Verkehrsinformationen im Vergleich zum Stand der Technik ist in Figur 11 schematisch gezeigt. Wie sich aus dieser Gegenüberstellung ergibt, ist der Versatz bei dem erfindungsgemäßen Verfahren wesentlich geringer als bei einem Verfahren nach dem Stand der Technik (SdT). Konkret werden bei dem erfindungsgemäßen Verfahren die Verkehrsinformationen nur für die Abschnitte TMC3 bis TMC4 und TMC8 bis TMC9 nicht zutreffend in dem Fahrzeug mit älterer Version der Positionstabelle ausgegeben.

Die Erfindung ist nicht auf die gezeigten Ausführungsformen beschränkt.

Die Erfindung lässt sich wie folgt zusammenfassen. Für die korrekte Behandlung der Verkehrsinformationen wird vorzugsweise eine "älteste" Kartenversion und damit die der Karte zugehörige Positionstabelle definiert, die unterstützt werden soll. Beispielsweise kann die Kartenversion zum Start von RTTI als älteste Kartenversion verwendet werden. RTTI steht hierbei als Abkürzung für Runtime Type Information ("Typinformation zur Laufzeit").

Die vorliegende Erfindung zielt darauf ab, dass TFP-Vektoren an Positionen, insbesondere TMC-Locations, aufgespaltet werden, die nicht in der "ältesten" Location Table vorhanden sind. Etwaige Ungenauigkeiten können durch Verwendung von relativen Offsets aufgefangen werden.

Mit der vorliegenden Erfindung kann eine Reihe von Vorteilen erzielt werden. Insbesondere können Verkehrsinformationen für Karten mit Location Tables, die neuer als die "älteste" unterstützte Location Table ist, korrekt dargestellt werden. Die Daten können ohne Anpassung der Vorrichtung in dem Fahrzeug, die auch als Head Unit bezeichnet werden kann, erreicht werden. Hierbei muss weder die Hardware, noch die Software angepasst werden, da nur die Art und Weise, wie die Verkehrsinformationen an dem Backend erzeugt und an das Fahrzeug übermittelt werden, angepasst werden muss. Die vorliegende Erfindung ist daher sehr generisch.

### Bezugszeichenliste

- TMCs: Startpunkt Traffic Management Location
- TMC1: Position (Traffic Management Location)
- TMC2: Position (Traffic Management Location)
- TMC3: Position (Traffic Management Location)
- TMC4: Position (Traffic Management Location)
- TMC5: Position (Traffic Management Location)
- TMC6: Position (Traffic Management Location)
- TMC7: Position (Traffic Management Location)
- TMC8: Position (Traffic Management Location)
- TMC9: Position (Traffic Management Location)
- TMC10: Position (Traffic Management Location)
- TMC11: Position (Traffic Management Location)

- TV1: Teilvektor
- TV2: Teilvektor
- TV3: Teilvektor
- TV4: Teilvektor
- TV5: Teilvektor
- TV6: Teilvektor
- TV7: Teilvektor

## Patentansprüche

1. Verfahren zum Erzeugen von Verkehrsinformationen für mindestens ein Fahrzeug, die mindestens eine Position umfassen, für einen Streckenverlauf auf einer geographischen Karte, der durch mindestens zwei Positionen bestimmt ist, **dadurch gekennzeichnet, dass** das Verfahren zumindest die folgenden Schritte umfasst:
- Vergleich einer aktuell verwendeten Positionstabelle mit mindestens einer weiteren Positionstabelle;
- Ermitteln von Abweichungen in den Einträgen der Positionstabellen an Positionen entlang des Streckenverlaufs; und
- bei Vorliegen einer Abweichung, Verwendung der Position des abweichenden Eintrages in einer der Positionstabellen als Referenzpunkt für die zu erzeugenden Verkehrsinformationen.

2. Verfahren nach Anspruch 1, **dadurch gekennzeichnet, dass** das Abweichen von Einträgen das Fehlen eines Eintrages der Position in der weiteren Positionstabelle oder das Vorhandensein eines zusätzlichen Eintrages einer Position in der weiteren Positionstabelle darstellt.

3. Verfahren nach einem der Ansprüche 1 oder 2, **dadurch gekennzeichnet, dass** das Verfahren zumindest den folgenden Schritt umfasst:
- Erzeugen von Verkehrsinformationen in Form eines Vektors anhand der aktuell verwendeten Positionstabelle, wobei die Position des mindestens einen abweichenden Eintrags als Referenzpunkt für das Erzeugen zumindest eines Teilvektors des Vektors verwendet wird.

4. Verfahren nach einem der Ansprüche 1 bis 3, **dadurch gekennzeichnet, dass** das Verfahren den Schritt des Bestimmens einer Endposition eines Teilvektors eines Vektors, der die Verkehrsinformationen darstellt, aus der aktuell verwendeten Positionstabelle umfasst, wobei die Position des mindestens einen abweichenden Eintrags als Endposition des Teilvektors verwendet wird.

5. Verfahren nach einem der Ansprüche 1 bis 4, **dadurch gekennzeichnet, dass** das Verfahren den Schritt des Bestimmens einer Startposition eines Teilvektors eines Vektors, der die Verkehrsinformationen darstellt, aus der aktuell verwendeten Positionstabelle umfasst, wobei bei Erkennen einer Abweichung an der Position der Startposition als Endposition des Teilvektors die nächste Position verwendet wird, an der keine Abweichung vorliegt.

6. Verfahren nach einem der Ansprüche 1 bis 5, **dadurch gekennzeichnet, dass** die Erzeugung der Verkehrsinformationen in einer Zentraleinrichtung erfolgt und die erzeugten Verkehrsinformationen von der Zentraleinrichtung in Form von mindestens einem Teilvektor an mindestens ein Fahrzeug übermittelt werden.

7. Verfahren nach einem der Ansprüche 1 bis 6, **dadurch gekennzeichnet, dass** die Positionstabelle eine TMC-Location Tabelle ist und/oder der Vektor einen TFP-Vektor darstellt.

8. Verfahren nach einem der Ansprüche 1 bis 7, **dadurch gekennzeichnet, dass** bei Erkennen der Verschiebung mindestens eines Teilvektors des Vektors ein relativer Offset, insbesondere metrischer Offset verwendet wird.

9. System zur Erzeugung von Verkehrsinformationen für mindestens ein Fahrzeug, **dadurch gekennzeichnet**, dieses eine Zentraleinrichtung und mindestens eine fahrzeuggebundene Vorrichtung umfasst, die derart eingerichtet sind, dass das Verfahren nach einem der vorhergehenden Ansprüchen durchführbar ist.

10. System nach Anspruch 9, **dadurch gekennzeichnet, dass** dieses ein Navigationssystem mit einem Backend als Zentraleinrichtung ist.

## Claims

1. A method for generating traffic information for at least one vehicle, said information including at least one position, for a route on a geographical map, which route is determined by at least two positions, **characterised in that** the method comprises at least the following steps:
- comparing a currently used position table with at least one further position table;
- determining deviations in the entries of the position tables at positions along the route; and
- when there is a deviation, using the position of the deviating entry in one of the position tables as a reference point for the traffic information which is to be generated.

2. A method according to claim 1, **characterised in that** the deviation of entries represents the absence of an entry of the position in the further position table or the presence of an additional entry of a position in the further position table.

3. A method according to either claim 1 or claim 2, **characterised in that** the method comprises at least the following step:
- generating traffic information in the form of a vector using the currently used position table, the position of the at least one deviating entry being used as a reference point for the generation of at least one sub-vector of the vector.

4. A method according to any one of claims 1 to 3, **characterised in that** the method comprises the step of determining an end position of a sub-vector of a vector which represents the traffic information, from the currently used position table, the position of the at least one deviating entry being used as the end position of the sub-vector.

5. A method according to any one of claims 1 to 4, **characterised in that** the method comprises the step of determining a starting position of a sub-vector of a vector which represents the traffic information, from the currently used position table, and upon detecting a deviation in the position of the starting position, the next position in which there is no deviation is used as the end position of the sub-vector.

6. A method according to any one of claims 1 to 5, **characterised in that** the traffic information is generated in a central device and the generated traffic information is transmitted from the central device to at least one vehicle in the form of at least one sub-vector.

7. A method according to any one of claims 1 to 6, **characterised in that** the position table is a TMC location table and/or the vector is a TFP vector.

8. A method according to any one of claims 1 to 7, **characterised in that** upon detecting the displacement of at least one sub-vector of the vector, a relative offset, more especially a metric offset is used.

9. A system for generating traffic information for at least one vehicle, **characterised in that** said system comprises a central device and at least one vehicle-bound device which are configured such that the method can be implemented according to any one of the preceding claims.

10. A system according to claim 9, **characterised in that** the said system is a navigation system having a backend as the central device.

## Revendications

1. Procédé permettant de générer des informations relatives au trafic pour au moins un véhicule qui comprennent au moins une position pour un tracé de route sur une carte géographique qui est défini par au moins deux positions,
**caractérisé en ce que** le procédé comprend au moins les étapes suivantes consistant à :
- comparer une table de positions actuellement utilisée avec au moins une autre table de positions,
- détecter des écarts dans les éléments des tables de position sur des positions le long du tracé de la route, et
- en présence d'un écart utiliser la position de l'élément déviant dans l'une des tables de position en tant que point de référence pour les informations relatives au trafic devant être générées.

2. Procédé conforme à la revendication 1,
**caractérisé en ce que**
l'écart d'éléments représente l'absence d'un élément de position dans l'autre table de position ou la présence d'un élément de position supplémentaire dans l'autre table de positions.

3. Procédé conforme à l'une des revendications 1 et 2,
**caractérisé en ce que**
le procédé comprend au moins l'étape suivante consistant à :
- générer des informations relatives au trafic sous la forme d'un vecteur à l'aide de la table de positions actuellement utilisée, la position de l'élément déviant étant utilisée en tant que point de référence pour l'obtention d'au moins un sous vecteur du vecteur.

4. Procédé conforme à l'une des revendications 1 à 3,
**caractérisé en ce que**
le procédé comprend l'étape consistant à déterminer la position finale d'un sous vecteur d'un vecteur qui représente les informations relatives au trafic à partir de la table de positions actuellement utilisée, la position de l'élément déviant étant utilisée en tant que position finale du sous vecteur.

5. Procédé conforme à l'une des revendications 1 à 4,
**caractérisé en ce que**
le procédé comprend une étape consistant à déterminer la position de départ d'un sous vecteur d'un vecteur qui représente les informations relatives au trafic à partir de la table de positions actuellement utilisée, et, en cas d'identification d'un écart au niveau de la position de la position de départ, la position suivante pour laquelle il n'y a pas d'écart est utilisée en tant que position finale du sous vecteur.

6. Procédé conforme à l'une des revendications 1 à 5,
**caractérisé en ce que**
la génération des informations relatives au trafic s'effectue dans un dispositif central, et les informations relatives au trafic générées sont transmises par le dispositif central à au moins un véhicule sous la forme d'au moins un sous vecteur.

7. Procédé conforme à l'une des revendications 1 à 6,
**caractérisé en ce que**
la table de positions est une table de positions TMC et/ou le vecteur représente un vecteur TFP.

8. Procédé conforme à l'une des revendications 1 à 7,
**caractérisé en ce que**
en cas d'identification d'un décalage d'au moins un sous vecteur du vecteur, on utilise un déport relatif, en particulier un déport métrique.

9. Système permettant de générer des informations relatives au trafic pour au moins un véhicule,
**caractérisé en ce qu'**
il comprend un dispositif central et au moins un dispositif lié au véhicule qui sont conçus de façon à permettre la mise en oeuvre du procédé conforme à l'une des revendications précédentes.

10. Système conforme à la revendication 9,
**caractérisé en ce qu'**
il est constitué par un système de navigation comprenant un Backend en tant que dispositif central.
